# EUROPEAN PATENT SPECIFICATION

(11) **EP 0 656 036 B1**
(45) Date of publication and mention of the grant of the patent: **04.11.1998**
(21) Application number: 94918190.3
(22) Date of filing: 31.05.1994
(51) Int. Cl.: C08L 23/20

(54) **ELASTOMERIC POLYBUTYLENE POLYMER**
ELASTOMER POLYBUTEN POLYMER
POLYMERE DE POLYBUTYLENE ELASTOMERE

(30) Priority: 01.06.1993 US 70076
(43) Date of publication of application: 07.06.1995
(73) Proprietor: SHELL OIL COMPANY, Houston, Texas 77252-2463 (US)
(72) Inventor: HWO, Charles, C., Sugar Land, TX 77478 (US); WILPERS, Dale, J., Houston, TX 77084 (US)
(74) Representative: Ellis-Jones, Patrick George Armine
(86) International application number: PCT/US94/06142
(87) International publication number: WO 94/28066

(56) References cited:
- EP-A- 0 186 968
- WO-A-90/12816
- US-A- 4 971 936

## Description

This invention generally relates to novel polymers of 1-butene. More particularly, this invention relates to elastomeric polybutylene-1 polymers.

Thermoplastic, predominantly isotactic homo- and copolymers of 1-butene, commonly referred to as poly-1-butene or polybutylene (conventional polybutene-1) are known in the art. Elastomeric polymers including elastomeric polybutylene-1 are also known in the art. In certain applications, there has been an effort to replace conventional polybutylene-1 with elastomeric polybutylene-1. These applications include film sheets and packaging film where the elastic nature of the elastomeric polybutylene-1 is preferred.

Packaging films are required to have certain characteristics which are desirable for the particular application. For example, films which are used for wrapping food such as vegetables, meat or fish, are minimally required to have a good puncture resistance and a good elastic recovery, sometimes also referred to as memory. A good puncture resistance is particularly important when packaging meat with bones because of the greater likelihood of the bones puncturing the film. Good recovery properties are particularly important in packaging food. Usually, the food is sold in service or convenience stores, or in grocery stores where many customers touch the packages. These touchings deform the film, and without the ability to sufficiently recover, the packaged food looks unfresh and often cannot be sold anymore.

WO90/12816 describes a process and a catalyst for the production of elastomeric, primarily stereoregular poly-α-olefin characterized by a relatively narrow distribution of relatively short block lengths.

It is an object of the invention to provide an elastomeric polybutylene-1 having significantly improved properties.

It is a further object of the invention to provide an elastomeric polybutylene-1 having a significant amount of syndiotacticity.

Accordingly, there is now provided an elastomeric polybutylene-1 having and exhibiting syndiotacticity of greater than ten (10) percent.

The present invention provides a blend of a polymer composition consisting essentially of elastomeric polybutylene-1 (ELPB) wherein said elastomeric polybutene-1 has and exhibits syndiotacticity of greater than ten percent and of at least one compatible or incompatible material.

The inventive elastomeric polybutylene-1 can be blended with compatible materials such as polypropylene and its copolymers, ethylene-propylene block copolymers, butyl rubbers, and polyisobutylene into a composition having soft and improved elastic properties. Such compositions are particularly suitable in textile and fibre applications.

The novel elastomeric polybutylene-1 can also be blended with incompatible materials such as ethylenically unsaturated esters (EVA, EMA, EMAA, EEA), polyester, nylon, polystyrene, styrene block copolymers (SEBS, SIS, SBS) and polyethylenes. Such blends are particularly useful in easy-open packaging applications, and in PVC replacement. When oriented, films made of such blends are used as soft and elastic shrink films.

The blend of the invention may comprise at least one compatible and at least one incompatible material.

The invention also provides articles of manufacture comprising a composition of the invention. The inventive elastomeric polybutylene-1 composition also has utility in automotive and hot melt adhesive applications, and in the manufacturing of disposable products.

Polybutylene polymers are well known in the art. These polymers can be homopolymers or copolymers. The homopolymers of polybutylene can be further classified into isotactic, atactic, or syndiotactic. Conventional polybutylene is predominantly isotactic and has a high degree of crystallinity. Prominently useful properties of conventional isotactic polybutylene include toughness, resistance to creep, and resistance to environmental stress cracking. These properties enable conventional isotactic polybutylene to be useful in applications such as pipe or tubing, films, and polymer modifications.

Another type of polybutylene known in the art is elastomeric polybutylene. Elastomeric polybutylene, like conventional polybutylene, is highly stereoregular. However, unlike conventional polybutylene, it has a lesser degree of crystallinity, and exhibits physical properties which more closely parallel those of thermoplastic elastomers such as commercial block copolymers based on styrene and diolefins or complex blends of polypropylene with elastomeric copolymers of ethylene and propylene.

A prominent feature of elastomeric polybutylene is its substantially suppressed level of crystallinity compared to conventional polybutylenes. A companion feature of the elastomeric polybutylene, one which makes it unique among the large number of polyolefins produced with stereoselective catalyst, is the fact that this suppression of crystallinity is achieved without a corresponding large increase in amount of easily extractable polymer (soluble in refluxing diethyl ether). This unusually low ether solubles content makes possible film use for medical and food packages that cannot tolerate substantial leaching of the plastic into the solutions or food.

Another distinguishing feature of the novel elastomeric polybutylene is its ¹³C NMR spectrum. The ¹³C NMR method provides detailed information about the configuration and conformation of short sections of polymer chains. A comparison of the ¹³C NMR spectra of conventional polybutylene with that of the novel elastomeric polybutylene indicates a significant difference between the polymers, even though they both have a very high degree of steric order. The difference shows up in the elastomeric polybutylene as a higher proportion of polymer which comprises of short sequences of frequent tactic inversion alternating with longer isotactic sequences. This indicates a molecular structure of relatively short average isotactic sequences, which contrasts strikingly with the structure of long average isotactic sequences of conventional polybutylene. The elastomeric polybutylene consists mainly of isotactic blocks, interrupted by inversions of only one or a few monomer units largely in alternating (syndiotactic) stereochemical configurations.

Elastomeric polybutylene having a wide range of molecular weights may be produced. Number average molecular weights (Mn) may be from 20,000 to 300,00 and weight average molecular weights (Mw) from 150,000 to 2,200,000. A characteristic of the novel elastomeric polybutylene of this invention is a narrow molecular weight distribution, as indicated by the ratio of Mw/Mn (Q-value) which is typically in the order of 70 to 75%wt or less than the Q-value of conventional polybutylene.

Both conventional and elastomeric isotactic polybutylene are unique compared to other commercial polyolefins in that they are capable of existing in several crystalline modifications which can be isolated in almost pure form. Conventional isotactic polybutylene typically first solidifies from the melt in the crystal form known as Type II. Type II is unstable with respect to Type I and converts to Type I at a rate depending on a variety of factors, such as molecular weight, tacticity, temperature, pressure, and mechanical shock. Properties of the several crystal forms of conventional isotactic polybutylene are well known. The transformation of Type II to Type I has a marked effect on the physical properties. For example, density, rigidity and strength are increased.

Unlike conventional polybutylenes, our unique elastomeric polybutylene crystallizes from melt in the form of crystal Type II, which is not distinctly transformed to crystal Type I over a period of hours or days. The physical properties of this type of elastomeric polybutylene (ELPB) made with SHAC™ 201 catalyst is significantly different from the polymer made from the conventional isotactic polybutylene (I-PB) with titanium trichloride (TiCl₃) as catalyst and the short stereoblock polybutylene (SSPB) made with a SHAC™ 103 catalyst.

The novel elastomeric polybutylene can also be made with the catalyst system disclosed in U.S. Patent No. 4,971,936. The catalyst comprises the reaction of a magnesium alkoxide and a tetravalent titanium halide wherein the reaction takes place in the presence of an electron donor which is selected from the group consisting of 3-methyl-veratrole, 3-methoxy-veratrole, 4-nitro-veratrole and 4-methoxy-veratrole.

Table 1 lists the general physical properties of the elastomeric polybutylene (ELPB) of this invention. Also shown in Table 1, for comparison, are corresponding properties of a butene-1 homopolymer (I-PB) produced on a commercial scale in a solution process with TiCl₃ as catalyst and those of butene-1 homopolymer (SSPB) with a SHAC™ 103 catalyst.

**TABLE 1**

| COMPARISON OF ELPB, SSPB, AND I-PB | | | |
|---|---|---|---|
| PROPERTY | ELPB | SSPB* | I-PB |
| Catalyst | SHAC 201 | SHAC 103 | TiCl₃ |
| % Isotacticity | <70 | 71-80 | >80 |
| Liso | <20 | <25 | >85 |
| % Syndiotacticity** | >10 | 5-10 | <5 |
| Melting Point, °C, | | | |
| 1st Heat | <105 | 100-118 | >120 |
| 2nd Heat | <101 | 98-110 | >110 |
| % Crystallinity | <25 | 25-40 | >40 |
| Tensile Strength @ Break KPa (psi) | <20684 (<3,000) | 20684-31026 (3,000-4,500) | 31026 (>4,500) |
| Elongation at Break, % | >500 | 300-600 | <400 |
| Yield Strength, KPa (psi) | No Yield Point | 2758-11721 (400-1,700) | 11721 (>1,700) |
| Tensile Set, % | <170 | 150-200 | >200 |

| | | | |
|---|---|---|---|
| * Data mostly from the U.S. Statutory Invention Registration No. H179. | | | |

As shown in Table, 1, the elastomeric polybutylene is very distinctly different from the other type polybutylenes in basic molecular configuration in such properties as tacticity, and isotactic block length (Liso). They are also different in physical properties such as melting points, percent (%) crystallinity, tensile break strength, elongation, tensile yield strength and percent (%) tensile set. The no tensile yield point and low tensile set of the elastomeric polybutylene is particularly suitable in applications pertaining to the replacement of PVC film as film wrap and in the manufacture of fibers where high resiliency is required.

The invention is further described by the following non-limiting examples and data tables.

### Example 1

Butene polymerizations were conducted in a one gallon stainless steel autoclave utilizing 1.7 liters of butene-1 monomer. The magnesium alkoxide compound of the formula:

Mg₄(OCH₃)₆(CH₃OH)₁₀(1,3-0,OH-C₆H₄)₂, M

(wherein (1,3-O,OH-C₆H₄)₂, M is a resorcinate) was used to prepare the procatalyst. The magnesium alkoxide compound was prepared by the dropwise addition of tetraethoxysilane stabilized 12% magnesium methoxide solution to a solution of resorcinol in methanol. Partial azeotropic desolvation was carried out by slurrying 40 grams of M in 300 grams of cyclohexane containing 120 grams of tetraethoxysilane and boiling the mixture until a decrease of 20 to 30% in solvent volume had occurred.

The procatalyst was prepared by stirring 7.8 grams of dissolved M with 12 mmoles of 4-methoxyveratrole in 200 ml of a 50-50 titanium tetrachloride-chlorobenzene solution for one hour at 115°C followed by two washes at 115°C with fresh 200 ml portions of that solvent mixture, then a quick rinse (less than 10 minutes) with 100 ml of fresh titanium tetrachloridechloro-benzene solvent mixture. Excess titanium was removed by thorough isopentane rinsing and the catalyst was dried under moving nitrogen at 40°C. Ti content was 3.55%. A portion of the dry procatalyst powder was then made into a 5% slurry in mineral oil.

In the following polymerizations, triethyl aluminum was used as a 0.28 molar in isooctane. Tiisobutyl aluminum was used as a 0.87 molar solution in heptane. Diethylaluminum chloride was used as a 1.5 molar solution in heptane.

The polymerization was carried out by mixing 0.015 to 0.003 mmol of procatalyst, aluminum alkyl, and selectivity control agent (SCA) then, after 20 minutes, injecting the mixture into 1.8 liters of liquid butene-1 in the one gallon stainless autoclave. At the end of 90 minutes the reactions were terminated by injecting 600 ml of isopropyl alcohol to the cooled reactor prior to venting the unreacted monomer. Additional details regarding the catalysts utilized is summarized in Tables IIA and IIB.

**Table IIA.**

| Catalysts With Substituted Veratrole As Electron Donors Internal (SCA) | | | | |
|---|---|---|---|---|
| Catalyst | Electron Donor | | Mg | Ti |
| # | Name | Mmol | % Wt | % Wt |
| 1 | Vera | 8.6 | 20.2 | 3.01 |
| 2 | 30 MV | 10 | 17.9 | 5.78 |
| 3 | 40 MV | 12 | 18.8 | 3.55 |
| Note: Vera = Veratrole 30 MV = 3 Methoxyveratrole 40 MV = 4 Methoxyveratrole | | | | |

**Table IIB.**

| Autoclave Runs to Produce ELPB With Veratrole-Based Catalysts (1.8 liters butene-1, 0.01-0.02 mol Ti, 60°C, 90 min.) | | | | | |
|---|---|---|---|---|---|
| Run # | Cat. # | SCA | SCA/Ti mol/mol | TEA/Ti mol/mol | Yield Kg/g cat. |
| 1 | 1 | CYANCL | 4 | 105 | 8.0 |
| 2 | 2 | DIBDMS | 5 | 107 | 4.2 |
| 3 | 3 | None | - | 70 | 7.0 |
| NOTE: CYANCL = Cyanuric Chloride DIBDMS = Diisobutyl dimethoxysilane TEA = Titanium SCA = Selectivity Control Agent | | | | | |

The tensile data and NMR results are shown in Tables IIC and IID, respectively.

**Table IIC.**

| Tensile Data of the ELPB Produced | | | | |
|---|---|---|---|---|
| Run # | Tbreak KPa (psi) | Tset % | Tyield (psi) | Elong. % |
| 1 | 18967 (2751) | 162 | No | 485 |
| 2 | 13320 (1932) | 166 | Yield | 346 |
| 3A | 11093 (1609) | 110 | Point | 557 |
| 3B | | 100 | | 600 |

**Table IID.**

| NMR Result of the ELPB Produced | | | |
|---|---|---|---|
| Run # | ISO % | Liso Units | Syn % |
| 1 | 68 | 17 | 13 |
| 2 | 64 | 16 | 14 |
| 3 | 60 | 10 | 16 |

The low tensile set values and no yield point of the novel elastomeric polybutylene makes it suitable in film applications which requires good recovery upon stretch and in fiber applications which requires good recovery upon compression.

### Example 2

The ELPB product from run #3 in Example 1 was further characterized based on its physical properties. These properties are summarized in Table IIIA.

**Table IIIA.**

| Physical Properties of ELPB Product from Run #3, Example 1 | |
|---|---|
| % Isotacticity | 60 |
| Liso, Units | 10 |
| % Syndiotacticity | 16 |
| Melting Point, °C | |
| 1st Heat | 101.5 |
| 2nd Heat | 100.3 |
| % Crystallinity | 20 |
| Tensile Strength at Break, KPa (psi) | 11093 (1609) |
| Elongation at Break, % | 557 |
| | 660 |
| Yield Strength | No Yield Point |
| Tensile Set, % | 110 |
| | 120 |

The ELPB because of its low tensile set and no tensile yield point is very suitable for the manufacture of wrapping films for fresh meat and produce and in fibers for carpets.

## Claims

1. A blend of a polymer composition consisting essentially of elastomeric polybutylene-1 (ELPB) wherein said elastomeric polybutene-1 has and exhibits syndiotacticity of greater than ten percent and at least one compatible or incompatible material.

2. A blend as in claim 1 wherein said ELPB is further characterized by the following properties:
% Isotacticity: less than 70
Isotactic Block Length: less than 20 units
Melting points, °C: 1st heat: <105; 2nd heat: 101
Tensile Strength at Break, KPa (psi): <20684 (<3,000)
Tensile Yield Strength <KPa (<psi): No yield point
Tensile Set, %: <170

3. A blend as in claim 1 or 2 which comprises at least one compatible material.

4. A blend as in claim 3 wherein said compatible material is of polypropylene, or a propylene copolymer, an ethylene-propylene block copolymer, butyl rubber or polyisobutylene.

5. A blend as in any one of claims 1 to 4 which comprises at least one incompatible material.

6. A blend as in claim 5 wherein said incompatible material is an ethylenically unsaturated ester (EVA, EMA, EMAA, EEA), polyester, nylon, polystyrene, styrene block copolymer (SEBS, SIS, SBS) or polyethylene.

7. A blend as in any one of claims 1 to 6 which comprises at least one compatible and at least one incompatible material.

8. An article of manufacture made from the composition of any one of the preceding claims.

## Patentansprüche

1. Gemisch aus einer Polymermasse, bestehend im wesentlichen aus elastomerem Polybutylen-1 (ELPB), wobei das elastomere Polybuten-1 eine Syndiotaxie von mehr als 10 % hat und zeigt, sowie mindestens einem verträglichen oder unverträglichen Material.

2. Gemisch nach Anspruch 1, wobei das ELPB ferner durch die folgenden Eigenschaften gekennzeichnet ist:
% Isotaxie: weniger als 70
Isotaktische Blocklänge: weniger als 20 Einheiten
Schmelzpunkte, °C: 1. Erhitzen: <105; 2. Erhitzen: 101
Bruchzugfestigkeit: <20684 kPa (<3000 psi)
Fließgrenze unter Zugbelastung: <kPa (<psi): keine Fließgrenze
Bleibende Dehnungsverformung %: <170.

3. Gemisch nach Anspruch 1 oder 2, umfassend mindestens ein verträgliches Material.

4. Gemisch nach Anspruch 3, wobei das verträgliche Material Polypropylen oder ein Propylencopolymer, ein Ethylen/Propylen-Blockcopolymer, Butylkautschuk oder Polyisobutylen ist.

5. Gemisch nach einem der Ansprüche 1 bis 4, umfassend mindestens ein unverträgliches Material.

6. Gemisch nach Anspruch 5, wobei das unverträgliche Material ein ethylenisch ungesättigter Ester (EVA, EMA, EMAA, EEA), Polyester, Nylon, Polystyrol, ein Styrolblockcopolymer (SEBS, SIS, SBS) oder Polyethylen ist.

7. Gemisch nach einem der Ansprüche 1 bis 6, umfassend mindestens ein verträgliches und mindestens ein unverträgliches Material.

8. Gegenstand aus einer Masse nach einem der vorangehenden Ansprüche.

## Revendications

1. Mélange d'une composition de polymère, essentiellement constituée d'un polybutène-l élastomère (PBEL), lequel polybutène-1 élastomère présente un taux de syndiotacticité supérieur à 10 %, et d'au moins un matériau compatible ou incompatible.

2. Mélange conforme à la revendication 1, dans lequel ledit PBEL possède en outre les caractéristiques suivantes :
taux d'isotacticité : inférieur à 70 %
longueur de séquence isotactique : moins de 20 motifs unitaires
points de fusion : au premier chauffage, < 105 °C ;
au deuxième chauffage : 101 °C
résistance à la rupture en traction : < 20 684 kPa (< 3 000 psi)
limite élastique < KPa (< psi) : pas de limite élastique
allongement permanent après traction : < 170 %

3. Mélange conforme à la revendication 1 ou 2, qui comporte au moins un matériau compatible.

4. Mélange conforme à la revendication 3, dans lequel ledit matériau compatible est un polypropylène, un copolymère de propylène, un copolymère séquencé d'éthylène et de propylène, un butyl-caoutchouc ou un polyisobutène.

5. Mélange conforme à l'une des revendications 1 à 4, qui comporte au moins un matériau incompatible.

6. Mélange conforme à la revendication 5, dans lequel ledit matériau incompatible est un ester à insaturation éthylénique (EVA, EMA, EMAA, EEA), un polyester, un nylon, un polystyrène, un copolymère séquencé du styrène (SEBS, SIS, SBS) ou un polyéthylène.

7. Mélange conforme à l'une des revendications 1 à 6, qui comporte au moins un matériau compatible et au moins un matériau incompatible.

8. Article fabriqué en une composition conforme à l'une des revendications précédentes.
